# EUROPEAN PATENT SPECIFICATION

(11) **EP 1 952 885 B1**
(45) Date of publication and mention of the grant of the patent: **20.05.2015**
(21) Application number: 06841783.1
(22) Date of filing: 16.11.2006
(51) Int. Cl.: C04B 38/06, B01J 23/42, B01J 23/46, B01D 53/86, B01J 23/755, B01J 35/10, B01J 37/00, C04B 35/119, C04B 35/195, C04B 35/528, C04B 14/02, C04B 35/622, C04B 35/20, C04B 111/00

(54) **METHOD FOR THE PREPARATION OF METAL OR METAL OXIDE CATALYSTS THAT ARE SUPPORTED ON POROUS MATERIALS**
VERFAHREN ZUR HERSTELLUNG VON AUF PORÖSEN MATERIALIEN ANGEBRACHTEN METALL- ODER METALLOXID-KATALYSATOREN
PROCÉDÉ DESTINÉ À LA PRÉPARATION DE CATALYSEURS À BASE DE MÉTAUX OU D'OXYDES MÉTALLIQUES SUPPORTÉS SUR DES MATÉRIAUX POREUX

(30) Priority: 18.11.2005 ES 200502841
(43) Date of publication of application: 06.08.2008
(73) Proprietor: Consejo Superior de Investigaciones Cientificas (CSIC), 28006 Madrid (ES)
(72) Inventor: BLANCO ALVAREZ, Jesús, 28049 Madrid (ES); AVILA GARCIA, Pedro, 28049 Madrid (ES); CHACON LARIOS, Carlos, 28049 Madrid (ES); RAMOS JIMENEZ, Juan Miguel, 28049 Madrid (ES)
(74) Representative: Curell Suñol S.L.P.
(86) International application number: PCT/ES2006/070176
(87) International publication number: WO 2007/057496

(56) References cited:
- JP-A- 57 105 245
- US-A- 4 448 896
- US-A- 4 598 060
- BLANCO ET AL: "Tailor-made high porosity VOC oxidation catalysts prepared by a single-step procedure", APPLIED CATALYSIS B: ENVIRONMENTAL, ELSEVIER, vol. 73, no. 1-2, 29 March 2007 (2007-03-29), pages 128-134, XP022007722, ISSN: 0926-3373, DOI: DOI:10.1016/J.APCATB.2006.06.017
- BLANCO J. ET AL.: 'Novel one-step synthesis of porous-supported catalysts by activated-carbon templating' ADVANCED MATERIALS vol. 18, no. 9, May 2006, pages 1162 - 1165, XP003013263
- SCHWICKARDI ET AL.: 'Direct Synthesis of Supported noble Metal Catalysts via the Activated Carbon Route' Z. PHYS. CHEM. vol. 219, July 2005, pages 939 - 948
- BLANCO J ET AL: "Single-step synthesis of porous supported catalyst", PROCEEDINGS OF THE XIV INTERNATIONAL MATERIAL RESEARCH CONGRESS, SOCIEDAD MEXICANA DE MATERIALES, A.C, MEXICO; CANCUN, MEXICO, 1 January 2005 (2005-01-01), page 5, XP008137865, ISBN: 968-863-816-1
- SUAREZ S ET AL: "New TiO2 monolithic supports based on the improvement of the porosity", CATALYSIS TODAY, ELSEVIER, NL, vol. 105, no. 3-4, 15 August 2005 (2005-08-15), pages 499-506, XP004998997, ISSN: 0920-5861, DOI: 10.1016/J.CATTOD.2005.06.019

## Description

### SECTOR OF THE TECHNIQUE

This patent lies within the chemical sector, with application as catalysts for producing inputs and in processes related to environmental protection.

### STATE OF THE ART

The activity of supported catalysts with industrial applications is directly related to the properties of highly dispersed particles of metals or metal oxides attached to the surface of the porous materials. The methods usually used to prepare these catalysts are complex and costly and involve numerous stages.

To prepare a support of large surface area, the following operations are usually required: a) dry mixing of the raw materials. This Is done using solid particles of the material to be used as support, or its precursor, and additives that will be used as binding agents, lubricants or pore generators, b) wet mixing and kneading for shaping; when this is carried out by pastillation, this step may eventually be omitted, c) compaction, generally carried out by extrusion or pastillation, for which it must be compressed to give it the desired shape, d) the shaped materials must then be dried to remove the solvent, this step must be controlled to prevent the formation of cracks, since if the solvent is removed too rapidly this can weaken the solid structure [P. Avila, M. Montes and E. Miró "Monolithic reactors for environmental applications. A review on preparation technologies" Chem. Eng. Journal, Chemical Engineering Journal 109 (2005) 11-36], e) depending on the precursors and additives used, the heat treatment must be controlled to produce the transformations required to obtain the supports in the desired phase; for example to transform bohemite into γ-Al₂O₃ (J. Blanco, P. Avila, M. Yates and A. Bahamonde "Characterization of alumina: sepiolite monoliths for use as industrial catalyst support" Journal of Material Science 29, (1994) 5927-5933), or TiO₂ (anatase) in (rutyl)[C. Knapp, F.J. Gil-Llambias, M. Gulppi-Cabra, P. Avila and J. Blanco, "Phase distribution in titaniasepiolite catalysts support prepared by different methods" Journal of Materials Chemistry 7 (8) 1641-1645 (1997), etc... This step is also decisive to stabilise the solid preventing disgreggation of the support when this is immersed in a solution and, finally, to decompose the temporary additives such as the Pore Generating Agents, PGA, to produce an optimised porous structure. One of these methods uses activated carbon [J. Blanco, P. Avila, L. Marzo, S. Suarez and C. Knapp "Low Temperature Monolithic Catalysts for Tail Gas Treatment in Nitric Acid Plants" Studies in Surface and Catalysis 130 (B)(2000) 1391 -1396].

The active phases are usually incorporated into the surface of the support by impregnation [X. Xu and J.A Muolijn "Transformation of a structured Carrier into Structured Catalyst" in "Structured Catalysts and Reactors", Edtrs A. Cybulski & J. A. Moulin Ed. Marcel Dekker, Inc N.Y. (1998) 599]. Starting with a solution of precursors of the active phases, the solid is Immersed in this so that the ions of the impregnating elements can reach the anchorage sites of the support in order to achieve the maximum dispersion possible of the elements to be deposited. S. Y. Lee and R. Aris ["The Distribution of Active ingredients in Supported Catalysts Prepared by Impregnation" Catal. Rev. Sci. Eng 27, 2 (1985) 207] and M. Komiyama, [Design and Preparation of Impregnated Catalysts" Catal Rev. - Sci. Eng 27, 2 (1985) 341], established the grounds for the standardisation of impregnation for the deposition of active phases in porous solids in order to obtain the desired concentration profiles. C. Perego and P. Villa, on their review of the preparation methods for catalysts ["Catalyst preparation methods" Catalysis Today 34 (1997) 281] have compiled these principles, and show that the isoelectric point, IEP, of the support, the pH of the solution, and the nature and concentration of the ionic species of the precursor play a very important role in the impregnation. By taking into consideration these principles, one can explain the great difficulty to impregnate certain active phases on some supports. This is the case for the impregnation of sepiolite with Pt, using chloroplatinic acid as a precursor, in which the platinum chloride ions present In the solution are strongly repelled by the sepiolite particles, which at pH > PIE (2.1) are negatively charged.

After preparing the support with the incorporated active phases, the actual catalyst is obtained after a series of heat treatments: a) drying to remove the solvent; during this process the dissolved salts can be taken from inside the pores to the entrance, resulting in an agglomeration of particles and, ultimately, poor dispersion of the active phase: b) calcination. This operation is decisive, since this is when the precursors are converted into the active phases of the catalyst. It is usually accompanied by salt decomposition reactions, with the consequent release of gases (NOx, SOx, CO₂, etc.), depending on the nature of the precursors. These transformations are carried out at high temperatures (400-600°C), in an oxidising atmosphere to obtain supported oxides and in a reducing atmosphere in the case of supported metals. To carry out this treatment correctly, not only are flameproof facilities required, but also the working conditions must be carefully controlled to prevent processes such as sinterization, agglomeration or encapsulation, with the consequent reduction in activity or selectivity [D. Sanfilipo. "The catalytic process from the laboratory to the industrial plant" Catalysis Today 34, (1997) -547].

The preparation of supported catalysts is a very time-consuming process with numerous steps. The drying stage and the final heat treatment are especially problematic since they can give rise to agglomeration or sinterization processes of the active phases that are difficult to control, which produce low values of the desired dispersion, with the subsequent reduction in catalytic performance. Another drawback of this technique is the electronic incompatibility that can occur between precursors of the active phases and the support, or its precursors, making it impossible to effectively prepare the corresponding catalyst.

The present invention as defined by the claims establishes a new strategy to prepare metals or metal oxides supported on porous materials, which is a significant improvement on the method used previously, owing to its great simplicity, low cost and the excellent performance of the catalysts It produces. In this new procedure, the catalysts are prepared by shaping a paste obtained by mixing in aqueous medium powders of the support, or of its precursors, with activated carbon previously impregnated with the active phase, or with precursors of the active phase. After obtaining the material in the desired shape (extruded, spheres, cylinders, honeycomb structures, etc.) it is then dried and treated in air at controlled temperature to remove the active carbon by total combustion.

This is, therefore, a procedure that can be widely applied that combines a simple manufacturing process to produce catalysts with extraordinary properties.

Document US 4.598.060 describes alumina and/or silica supported catalysts which have a portion of their pores in the range of 75-1500 Angstrom and wherein one or more catalytically active metal species is contained substantially within said pores. Carbon black particles having pores of 75-1500 Angstrom and which have been reacted with the catalyst metal are used to prepare the catalyst using alumina and/or silica gels.

Document US 4.448.896 describes a hydrogenation catalyst for desulfurization and removal of heavy metals, that comprises (a) at least one metal component selected from metals of Groups VI B and VIII of the Periodic Table, as a catalytically active component, and (b) a porous activated alumina carrier obtained by shaping a mixture of carbon black and a powder of activated alumina or a precursor of activated alumina, drying the shaped mixture and firing it in an oxygen-containing gas stream to burn off the carbon black.

Document JP 57105245 describes how to obtain a catalyst composition with high activity for use in exhaust gas purification having a porous layer containing a noble metal by a method wherein carbon containing the noble metal and a slurry containing a metal oxide are adhered to a carrier and said carbon is removed by firing.

Other relevant documents are BLANCO J ET AL: "Single-step synthesis of porous supported catalyst", PROCEEDINGS OF THE XIV INTERNATIONAL MATERIAL RESEARCH CONGRESS, SOCIEDAD MEXICANA DE MATERIALES, A.C, MEXICO; CANCUN, MEXICO, 1 January 2005 (2005-01-01), page 5, XP008137865, ISBN: 968-863-816-1, and SUAREZ S ET AL: "New TiO2 monolithic supports based on the improvement of the porosity", CATALYSIS TODAY, ELSEVIER, NL, vol. 105, no. 3-4, 15 August 2005 (2005-08-15), pages 499-506, XP004998997, ISSN: 0920-5861, DOI: http://dx.doi.org/10.1016/j.cattod.2005.06.019

### DESCRIPTION OF THE INVENTION

The object is a procedure for the preparation of metal or metal oxide catalysts supported on porous materials comprising :
- impregnating activated carbon with a catalytically-active phase or with precursors of the catalytically-active phase, obtaining impregnated activated carbon,
- shaping a paste by mixing in aqueous medium a mixture of powder from the support and from the impregnated activated carbon, or powder from precursors of the support and from the impregnated activated carbon and
- submitting the product from the previous step to a heat treatment to remove the activated carbon by combustion, so the catalytically active phases are deposited on the support.

In this procedure, the ratio of activated carbon/support is preferably equal to 1 or less than 1; said support is preferably α-sapiolite titanium dioxide, alumina, silica or mixtures thereof.

The procedure may consist in the following steps: a) impregnation of the activated carbon powder with an aqueous solution of precursors of the catalytically active phases; b) homogeneously mixing the carbon powder prepared in the previous step with the powder of the support or its precursors; c) vigorously kneading the mixture obtained in the previous step to obtain a homogeneous paste with rheological properties appropriate for its extrusion or pastillation; d) shaping this paste into massive cylinders, smooth or ribbed pipe-type hollow cylinders, which may be straight, curved, regularly-shaped or irregularly shaped plates, extruded forms, spheres or honey-comb structures; e) drying the shaped pieces at room temperature for 2 hours and between 80°C and 120°C for at least two hours and then treating them at temperatures between 400°C and 850°C in air, with total elimination of the activated carbon.

The natural sepiolite used in this invention is compact α-sepiolite, which is very abundant In Spain, the fibrous morphology and peculiar structure of which are described in detail in the review published by Alvarez, A., Palygorskite-Sepiolite Ocurrentes, Genesis and Uses. Section VI, pp 253 - 286. Ed. by Singer and Galan. Elsevier. 1984; the α-sepiolite used when the treatment is carried out at 500°C for 4 hours in air has a specific surface area of 130 m²g⁻¹, atotal pore volume of 0.53 cm³g⁻¹ and a particle size of 90% < 0.3µm.

In a procedure for the preparation of a catalyst the catalytically active phase is selected from among rhodium, a precursor of rhodium, copper, a precursor of copper, nickel, a precursor of nickel, platinum, a precursor of platinum and combinations thereof.

A procedure for the preparation of a catalyst may comprise:
- impregnating activated carbon, In powder and previously dried, with chloroplatinic acid and obtaining activated carbon impregnated with chloroplatinic acid,
- mixing the impregnated activated-carbon with sepiolite in powder and previously dried, until a homogeneous mixture is obtained,
- mixing this homogeneous mixture by adding water, obtaining a paste,
- shaping this paste into a honeycomb structure in parallel-pipe shaped bodies,
- shaping this paste,
- drying and submitting this paste to a heat treatment.

Another procedure for the preparation of a catalyst may comprise:
- preparing an aqueous solution of rhodium chloride,
- impregnating activated carbon in powder with rhodium chloride, obtaining activated carbon impregnated with rhodium chloride,
- mixing the impregnated activated carbon with a mixture of dry α-sepioloite and titanium dioxide to obtain a homogenous mixture,
- kneading this homogeneous mixture by adding water, obtaining a paste,
- shaping this paste, and
- drying this paste and subjecting It to a heat treatment.

Another procedure for the preparation of a catalyst may comprise:
- preparing an aqueous solution of tri-hydrated copper nitrate and hexa-hydrated nickel nitrate, Ni (NO₃)₂·6 H₂O,
- impregnating activated carbon in powder with tri-hydrated copper nitrate and hexa-hydrated nickel nitrate, Ni (NO₃)₂·6 H₂O obtaining activated carbon impregnated with tri-hydrated copper nitrate and Ni (NO₃)₂·6 H₂O,
- mixing the impregnated activated-carbon with a mixture of dry α-sepiolite and bohemite, until a homogeneous mixture is obtained,
- kneading this homogeneous mixture by adding water, obtaining a paste,
- shaping this paste and
- drying and submitting this paste to a heat treatment.

A catalyst obtained according to the procedure described may be used in heterogeneous reactions systems

With the new procedure, any supported metal or metal oxide can be prepared. Also, activated carbons of different origins and characteristics can be prepared with particle sizes of 2-20 µm without having to significantly modify the procedure described here.

In relation to the amount of activated-carbon that is required for this procedure, this preferably will obey a 1:1 weight ratio relative to the weight of the final support. Ratios higher than the cited 1:1 will produce pastes that are difficult to extrude and bodies with unsuitable mechanical resistance for their industrial implementation, whilst lower ratios will produce materials with a less developed porosity but with better mechanical properties, which in certain cases could be of considerable interest.

The new procedure described can be used to obtain materials of different physical shape, although the honeycombed structure is especially indicated to treat fluids, for which the large volumes of fluids to be treated and the particles they contain in suspension make it necessary to use catalysts made with these parallel channels structures.

One of the benefits of this new procedure, in comparison to the previous technique, is that several steps of the manufacturing procedure can be omitted such as the prior conformation of the support that normally includes drying it and treating it with heat, impregnating it, drying the support and possibly its heat treatment in a reducing atmosphere. It also enables catalysts to be prepared using electronically incompatible compounds.

The use of carbon impregnated with the active phase precursors, instead of the aqueous solution of these used in the current technique, can prevent precursors of these active phases, using water vapour/water as a vehicle, from moving towards the mouth of the pores of the support and, in general, to the external surface of the solid during the drying phase, with the subsequent formation of agglomerates, loss of dispersion and reduced activity. In this new technique, this mobility is, therefore, prevented resulting in extraordinarily high dispersions. Likewise, the elimination of activated carbon by combustion generates gases in the interior of the shaped material resulting in considerable development of its macroporosity that results in a better behaviour when faced with external diffusion phenomena that take place during a catalytic process.

It is also important to note that in the preparation of supported noble metals according to this new procedure, the activated carbon dispersed throughout the material serves as a reducing element of metallic cations either directly or by the action of carbon monoxide formed at the sites of combustion with low oxygen supply, avoiding in this way complex reducing treatments at temperatures above 300°C, and often around 500°C that must be conducted in flameproof systems.

The use of previously impregnated activated carbon presents an additional advantage compared to the previous technique in that the incompatibilities existing between some aqueous solutions, such as chlorides of noble metals, and some supports, such as sepiolite and silica, do not have to be contemplated.

The materials obtained with this procedure are high-performance catalysts for industrial use in heterogeneous reaction systems, so when they are installed in a reactor they can transform the gases passed through the system, in fluidodynamic conditions of appropriate temperature and pressure, into desirable products.

### EXAMPLES

The present invention is also illustrated by the following examples, which must be interpreted as illustrative and not limiting.

### Example 1

A total of 10 kg of activated-carbon in powder previously dried at 110°C for 12 hours are impregnated with 3200cm³ of an aqueous solution containing 48.8 g of chloroplatinic acid of 400 thousandths. Next, the impregnated activated-carbon is mixed with 10 kg of sepiolite in powder, previously dried at 110°C for 12 hours. After obtaining a homogeneous mixture this is kneaded, after adding water, in a double helix kneader. The paste obtained is shaped into a honeycomb panel with the aid of an extruder. The material is then shaped into a parallel-piped shape with external dimensions of 50 x 50 x 500 mm with parallel square channels of 2.5 x 2.5 mm along the longitudinal axis and a wall thickness of 0.74 mm, a geometrical surface area of 944m²m⁻³ and a cell density of 9.3 cells cm⁻². These honeycomb shaped forms are dried at room temperature for 48 hours and at 110°C for 12 hours. After, they are submitted to a heat treatment in atmospheric air by raising the temperature by 5°C/min to 500°C, at which temperature It is maintained for 4 hours.

In this example, an activated carbon obtained from bituminous carbon was used with a specific surface area of 1093 m²g⁻¹, pore volume of diameter less than 50nm of 0.64 cm³g⁻¹, a particle size of 90%<12µm and 10% in weight as ash. The catalyst has been prepared with a weight ratio of activated carbon/α-sepiolite of 1:1.

The catalyst obtained contains 0.2% in weight of platinum deposited on α-sepiolite, presents a specific surface area of 98 m²g⁻¹ and a total pore volume of 1.8 cm³g⁻¹.

Using this catalyst to remove 250 ppm of toluene in air at a spatial velocity of 16,000 h⁻¹ (CN), a total pressure of 120 kPa, a conversion of almost 100% is obtained at a temperature of 210 °C.

When the steps given in Example 1 are followed, the catalyst is prepared with a lower carbon content, in other words, with activated carbon/α-sepiolite ratios = 1:3 or 1:9 in weight, respectively, materials are obtained with a specific surface area of 124 and 135 m²g⁻¹ and a total pore volume of 1.3 and 0.7 cm³g⁻¹ respectively, that give rise to inferior catalytic performances than would correspond to the catalyst prepared according to example 1, with a weight ratio of 1:1.

### Example 2 (comparative)

A total of 25.1g of rhodium chloride with a purity of 42.33% in weight of metal was weighed and dissolved in 1.5 kg of water. This solution was slowly added to the mixer to 3.55 kg of activated carbon and left overnight. In a powder mixer, 2.66 kg of α-sepiolite dried previously at 120°C for 12 hours and 2,66 kg of titanium dioxide were mixed. After obtaining a homogeneous mixture of powders, this was added to the activated carbon containing the active phase. Next, water was added and the mixture was kneaded to obtain a paste with suitable properties for extrusion. This paste was shaped into a honeycomb panel shape with the help of an extruder. The material is shaped into parallel-piped shapes with external dimensions of 50 x 50 x 500 mm with square parallel channels of 2.5 x 2.5 mm throughout the longitudinal axis and a wall thickness of 0.85 mm. These honeycomb shaped pieces are then dried at room temperature for 72 hours and at 110°C for 12 hours, After, they are submitted to a heat treatment In atmospheric air, raising the temperature by 5°C per minute to a final temperature of 500°C, where they remain for 4 hours.

The activated carbon used is that described in example 1. The ratio of activated carbon/support is 1:1.5 in weight.

The titanium dioxide used presents a specific surface area of 75 m²g⁻¹, a total volume of 0.49 cm³g⁻¹ and particles with a mean diameter of 0.05-0.1 nm that form agglomerates of 0.3 to 1 nm without losing their shape.

The catalyst obtained in a honeycomb shape contains 0.2% in weight of rhodium deposited on α-sepiolite/titanium dioxide with a ratio of 1:1 in weight and presents a specific surface area of 103 m²g⁻¹ and a total pore volume of 1.3 cm³g⁻¹.

This catalyst has been tested in a stainless-steel tubular reactor that operates with an almost isothermic profile in a regime near to piston flow, where a decomposition test has been carried out on traces of ammonia at a temperature of 600°C, a pressure of 120 kPa, a spatial velocity of 9000 h⁻¹ (C.N.), with an input of 600 ppm of ammonia in nitrogen, to obtain conversions higher than 97%.

In this same reaction system, the decomposition of traces of nitrous oxide has also been tested, with an input of 600 ppm of N₂O in nitrogen with a spatial velocity of 10,000 h⁻¹ (C.N.) and a pressure of 120 kPa. The conversion obtained was higher than 95% for a temperature of 450°C.

### Example 3 (comparative)

A total of 2000g of activated-carbon powder, previously dried at 120°C for 12 hours, was impregnated with 1500 cm³ of a solution containing 1140.6 g of trihydrated copper nitrate, Cu (NO₃₎₂·H₂O and 148.6 of hexa-hydrated nickel nitrate, Ni (NO₃)₂.6H₂O (Panreac, purity ≥ 99.9% in weight) and left to dry for 12 hours at room temperature. This powder was then mixed homogeneously with 4,700 g of bohemite and 2,000 g of α-sepiolite previously dried at 110°C for 12 hours. Then, the paste was prepared by kneading the mixture with deionised water in a double helix mixer. The extrusion steps, drying the honeycomb panels and subsequent heat treatment are the same as those described in the first example.

The bohemite used contains 15% in weight of structural water; when treated at 500°C for 4 hours in air and γ-alumina is obtained with a specific surface area of 156 m²g⁻¹ and a particle size of 90%< 90µm .

In this example, an activated carbon has been used obtained from wood with a specific surface area of 1270 m²g⁻¹, a total pore volume with diameters between 0 and 50 nm of 0.66 cm³g⁻¹ and a particle size of 90 < 3.7 µm. The amount used relative to the final support is a ratio of activated carbon/support of 1:3 in weight.

The catalyst obtained is composed of 6.26% in weight of copper oxide and 0.64% in weight of nickel oxide supported on alumina/α-sepiolite with a ratio of 2:1 in weight, presenting a specific surface area of 150m²g⁻¹ with a total pore volume of 0.86 cm³g⁻¹.

This catalyst used in the selective reduction of NOx with ammonia, at a spatial velocity of 9,300 h⁻¹ (C.N.), a total pressure of 120 kPa and a temperature of 300°C reduces 95% of a NO input to nitrogen and water. The composition of the input gases was 1000 ppm of NO, 1000 ppm of NH₃, 3% mol of O₂ and the rest was N₂.

## Claims

1. Procedure for the preparation of metal or metal oxide catalysts supported on porous materials **characterised in that** it comprises:
- Impregnating previously dried activated-carbon in powder, where the size of the particle of activated carbon is between 2 and 20 µm, with chloroplatinic acid, obtaining activated carbon impregnated with chloroplatinic acid,
- mixing the impregnated activated-carbon with α-sepiolite in powder previously dried to achieve a homogeneous mixture,
- kneading this homogeneous mixture, by adding water, to obtain a paste,
- shaping this paste, and
- drying this paste and treating it with heat to remove the activated carbon by combustion and, hence, cause the catalytically active phases to deposit on the support.

2. Procedure for the preparation of metal or metal oxide catalysts supported on porous materials according to claim 1, **characterised in that** the weight ratio of activated carbon/support is equal to or less than 1.

3. Procedure for the preparation of metal or metal oxide catalysts supported on porous materials according to one of the previous claims, **characterised In that** the paste is made into a shape selected from among: extruded forms, massive cylinders; smooth or ribbed pipe-like cylinders, straight or bent, of regular or irregular edges, plates, spheres and honeycomb structures.

4. Procedure for the preparation of metal or metal oxide catalysts supported on porous materials according to claim 1, **characterised in that** it comprises the following steps:
a) impregnating the activated carbon in powder with an aqueous solution of the precursors of the catalytically active phases,
b) homogeneously mixing the carbon powder prepared in the previous step with the powder of the support or its precursors,
c) vigorously mixing the mixture obtained in the previous step to obtain a homogeneous paste with appropriate rheological properties for extrusion or pastillation,
d) shaping this paste Into one of the following forms: extruded forms, massive cylinders; smooth or ribbed pipe-like cylinders, straight or bent, of regular or irregular edges, plates, spheres and honeycomb structures, and
e) drying the shaped parts at room temperature for at least 2 hours and between 80°C and 120°C for at least 2 hours, after which they are treated at temperatures between 400°C and 850°C in air until all the activated carbon has been removed.

## Patentansprüche

1. Verfahren zur Herstellung von auf porösen Materialien gestützten Metall- oder Metalloxidkatalysatoren, **dadurch gekennzeichnet, dass** es umfasst:
- Imprägnieren von vorher getrocknetem Aktivkohlepulver, wobei die Partikelgröße der Aktivkohle zwischen 2 und 20 µm beträgt, mit Chloroplatinsäure, wobei man mit Chloroplatinsäure imprägniertes Aktivkohle erhält,
- Mischen der imprägnierten Aktivkohle mit vorher getrocknetem α-Sepiolith zu einem homogenen Gemisch,
- Kneten dieses homogenen Gemisches unter Zusatz von Wasser zu einer Paste,
- Formen dieser Paste und
- Trocknen der Paste und Hitzebehandlung, um die Aktivkohle durch Verbrennung zu entfernen und so die Abscheidung der katalytisch aktiven Phasen auf dem Träger zu bewirken.

2. Verfahren zur Herstellung von auf porösen Materialien gestützten Metall- oder Metalloxidkatalysatoren nach Anspruch 1, **dadurch gekennzeichnet, dass** das Gewichtsverhältnis von Aktivkohle/zu Träger gleich oder weniger als 1 ist.

3. Verfahren zur Herstellung von auf porösen Materialien gestützten Metall- oder Metalloxidkatalysatoren nach einem der vorangehenden Ansprüche, **dadurch gekennzeichnet, dass** die Paste in eine Gestalt gebracht wird, ausgewählt aus: extrudierten Formen, Vollzylinder, glatte oder gerippte rohrartige Zylinder, gerade oder gebogen, mit regelmäßigen oder unregelmäßigen Rändern, Platten, Kugeln und Wabenstrukturen.

4. Verfahren zur Herstellung von auf porösen Materialien gestützten Metall- oder Metalloxidkatalysatoren nach Anspruch 1, **dadurch gekennzeichnet, dass** es die folgenden Schritte umfasst:
a) Imprägnieren des Aktivkohlepulvers mit einer wässrigen Lösung der Vorstufe der katalytisch aktiven Phasen,
b) homogenes Mischen des im vorigen Schritt hergestellten Aktivkohlepulvers mit dem Trägerpulver oder dessen Vorstufen,
c) intensives Mischen des im vorigen Schritt erhaltenen Gemisches zu einer homogenen Paste mit geeigneten rheologischen Eigenschaften für die Extrusion oder Pelletierung,
d) Formen der Paste in eine der folgenden Formen: extrudierte Formen, Vollzylinder, glatte oder gerippte rohrartige Zylinder, gerade oder gebogen, mit regelmäßigen oder unregelmäßigen Rändern, Platten, Kugeln und Wabenstrukturen.
e) Trocknen der geformten Teile bei Raumtemperatur während mindestens 2 Stunden zwischen 80 °C und 120 °C, wonach sie bei Temperaturen zwischen 400 °C und 850 °C in Luft behandelt werden, bis alle Aktivkohle entfernt ist.

## Revendications

1. Procédé de préparation de catalyseurs à base de métaux ou d'oxydes métalliques supportés sur des matériaux poreux, **caractérisé en ce qu'**il comprend :
- l'imprégnation d'un charbon actif pulvérulent préalablement séché, la taille de particule du charbon actif étant située entre 2 µm et 20 µm, avec de l'acide chloroplatinique, pour obtenir un charbon actif imprégné avec de l'acide chloroplatinique,
- le mélange du charbon actif imprégné avec de la α-sépiolite pulvérulente préalablement séchée afin d'obtenir un mélange homogène,
- le malaxage de ce mélange homogène, tout en ajoutant de l'eau, pour obtenir une pâte,
- la mise en forme de cette pâte, et
- le séchage de cette pâte et le traitement de celle-ci avec de la chaleur pour éliminer le charbon actif par combustion et, par conséquent, amener les phases catalytiquement actives à se déposer sur le support.

2. Procédé de préparation de catalyseurs à base de métaux ou d'oxydes métalliques supportés sur des matériaux poreux selon la revendication 1, **caractérisé en ce que** le rapport pondéral charbon actif/support est inférieur ou égal à 1.

3. Procédé de préparation de catalyseurs à base de métaux ou d'oxydes métalliques supportés sur des matériaux poreux selon l'une quelconque des revendications précédentes, **caractérisé en ce que** la pâte est mise sous une forme choisie parmi : les formes extrudées, les cylindres massifs ; les cylindres de type tuyau lisse ou à ailettes, droits ou pliés, à bords réguliers et irréguliers, les plaques, les sphères et les structures en nid-d'abeilles.

4. Procédé de préparation de catalyseurs à base de métaux ou d'oxydes métalliques supportés sur des matériaux poreux selon la revendication 1, **caractérisé en ce qu'**il comprend les étapes suivantes :
a) l'imprégnation du charbon actif pulvérulent avec une solution aqueuse des précurseurs des phases catalytiquement actives,
b) le mélange homogène du charbon pulvérulent préparé dans l'étape précédente avec la poudre du support ou ses précurseurs,
c) le mélange vigoureux du mélange obtenu dans l'étape précédente pour obtenir une pâte homogène ayant des propriétés rhéologiques appropriées pour l'extrusion ou le pastillage,
d) la mise en forme de cette pâte sous une des formes suivantes : les formes extrudées, les cylindres massifs ; les cylindres de type tuyau lisse ou à ailettes, droits ou pliés, à bords réguliers et irréguliers, les plaques, les sphères et les structures en nid-d'abeilles, et
e) le séchage des parties mises en forme à température ambiante pendant au moins 2 heures et entre 80 °C et 120 °C pendant au moins 2 heures, après quoi elles sont traitées à des températures situées entre 400 °C et 850 °C à l'air jusqu'à ce que la totalité du charbon actif soit éliminée.
